# EUROPÄISCHE PATENTSCHRIFT

(11) **EP 3 548 769 B1**
(45) Veröffentlichungstag und Bekanntmachung des Hinweises auf die Patenterteilung: **05.04.2023**
(21) Anmeldenummer: 16804765.2
(22) Anmeldetag: 29.11.2016
(51) Int. Cl.: F16H 3/56, B60K 17/02, B60K 17/08, F16H 3/54

(54) **ACHSANTRIEBSEINHEIT FÜR EINEN ZUMINDEST AUCH ELEKTROMOTORISCH ANGETRIEBENEN KRAFTFAHRZEUG-ANTRIEBSSTRANG EINES PERSONENKRAFTWAGENS MIT EINEM SCHALTBAREN ZWEIGANG-GETRIEBE**
AXLE UNIT FOR A AN AT LEAST ELECTRICALLY DRIVEN DRIVE TRAIN OF A PASSENGER VEHICLE WITH A SHIFTABLE TWO-SPEED TRANSMISSION
UNITÉ D'ENTRAÎNEMENT D'ESSIEU POUR UNE CHAÎNE CINÉMATIQUE D'UN VOITURE ENTRAINÉE PAR AU MOINS UNE MOTEUR ÉLÉCTRIQUE, AVEC UNE TRANSMISSION COMMUTABLE À DEUX VITESSE

(43) Veröffentlichungstag der Anmeldung: 09.10.2019
(73) Patentinhaber: GKN Automotive Ltd., Redditch, Worcestershire B98 0AJ (GB)
(72) Erfinder: HAUPT, Jan, 51515 Kürten (DE); ABBENHAUS, Moritz, 53842 Troisdorf (DE); WERKHAUSEN, Maximilian, 50739 Köln (DE)
(74) Vertreter: btb IP Bungartz Baltzer Partnerschaft mbB Patentanwälte
(86) Internationale Anmeldenummer: PCT/EP2016/079169
(87) Internationale Veröffentlichungsnummer: WO 2018/099542

(56) Entgegenhaltungen:
- DE-A1-102012 220 562
- DE-A1-102015 104 203
- FR-A1- 3 014 986
- JP-U- S5 457 101

## Beschreibung

Die Erfindung betrifft eine Achsantriebseinheit nach dem Oberbegriff des Anspruchs 1.

Die Übertragung von elektromotorischer und/oder verbrennungsmotorischer Antriebsleistung über ein Zweiganggetriebe, das in einem hybridischen Antriebsstrang angeordnet ist, der auch rein elektromotorisch angetrieben werden kann, ist in der WO 2010/063735 A1 offenbart. Bei dem in dieser Offenbarung beschriebenen Antriebsstrangkonzept handelt es sich um einen Hybridantriebsstrang, der die Übertragung von sowohl verbrennungsmotorischer Antriebsleistung als auch von elektromotorischer Antriebsleistung oder einer Kombination aus beiden Antriebsleistungsarten gewährleisten muss. Das Zweiganggetriebe muss demnach sowohl Eingangsglieder zur Einleitung der verbrennungsmotorischen Antriebsleistung als auch Eingangsglieder zur Einleitung der elektromotorischen Antriebsleistung aufweisen, deren Kombination ermöglichen und Übersetzungsstufen zur Verfügung stellen, die sowohl den Anforderungen des Verbrennungsmotors als auch den des Elektromotors gerecht werden. Für die Einbindung in einen rein elektromotorischen Antriebsstrang bietet sich dieses Zweiganggetriebe daher nicht ohne weiteres an. Das in der WO 2010/063735 A1 offenbarte Konzept ermöglicht ferner nicht die Realisierung bestimmter als vorteilhaft anzusehender Übersetzungsverhältnisse für rein elektromotorisch angetriebene Fahrzeuge und baut wenig kompakt, nicht zuletzt bedingt durch die Notwendigkeit, das Hohlrad für einen Wechsel der Übersetzungsstufe gegenüber einem stehenden Gehäuse abbremsen zu müssen und die Antriebsleistung den Radwellen über ein Drei-Wellen-Offset zuzuleiten.

Achsantriebseinheiten für einen zumindest auch elektromotorisch angetriebenen Kraftfahrzeug-Antriebsstrangs eines Personenkraftwagens sind auch in den Druckschriften DE 10 2015 104 203 A1 und DE 10 2012 220 562 A1 offenbart. Die hierin offenbarten Achsantriebseinheiten weisen hinsichtlich ihres Aufbaus und des sich hieraus ergebenden Bauraumbedarfs bzw. deren Anordnung im Fahrzeug aber Nachteile auf.

Die Druckschrift FR 3 014 986 A1 offenbart ein Automatikgetriebe mit einem integrieren Zweiganggetriebe, welches ein erstes und zweites Planetenrad, die drehfest miteinander verbunden sind, sowie zwei Sonnenräder aufweist.

Die Druckschrift JPS 54 57 101 U offenbart ein Getriebe für eine Bodenbearbeitungsmaschine, welches ein erstes und zweites Planetenrad, die drehfest miteinander verbunden sind, sowie zwei Sonnenräder aufweist.

Die Erfindung macht es sich zur Aufgabe, eine Achsantriebseinheit für einen zumindest auch elektromotorisch angetriebenen Kraftfahrzeug-Antriebsstrangs eines Personenkraftwagens mit einem bevorzugt lastschaltbaren Zweiganggetriebe zur Verfügung zu stellen, das kompakt baut und mit möglichst geringem Bauraumbedarf in die bevorzugt rein elektromotorisch anzutreibende Achsantriebseinheit integriert ist. Dabei soll sich mittels des Zweiganggetriebes ein für einen insbesondere rein elektromotorisch angetriebenen Antriebsstrang gut geeigneter Übersetzungssprung realisieren lassen, der bevorzugt auch unter Last vollzogen werden kann und eine vorteilhafte Abstimmung von erforderlicher Begrenzung des Anfahrmoments der E-Maschine beim Anfahren aus dem Stand und der erzielbaren Höchstgeschwindigkeit ermöglicht.

Die Aufgabe der Erfindung wird durch eine Achsantriebseinheit nach Anspruch 1 gelöst. Die abhängigen Ansprüche betreffen besondere Ausführungsarten der in Anspruch 1 beanspruchten Erfindung.

Dabei kann insbesondere vorgesehen sein, dass die Außenradeinheit ein Außenrad aufweist und die Planetenräder der Planeteneinheit wenigstens zum Teil oder aber vollständig radial innenliegend in das Außenrad integriert sind. Die Außenradeinheit kann insbesondere ein Außenrad mit einer Außenverzahnung aufweisen, über die die Vortriebsleistung in die Außenradeinheit eingeleitet wird. Die Außenverzahnung ist bevorzugt auf wenigstens einem Teil der nach außen weisenden Mantelfläche des Außenrads vorgesehen, wobei dieser mit der Außenverzahnung versehene Teil der Mantelfläche des Außenrads radial gesehen um zumindest einen Teil der Planetenräder der Planeteneinheit herum angeordnet sein kann. Die Planetenräder der Planeteneinheit sind demnach bevorzugt zumindest teilweise radial innerhalb des mit der Außenverzahnung versehenen Teils der Mantelfläche des Außenrades angeordnet, tauchen also in den gedachten Zylinder, den der mit der Außenverzahnung versehene Teil der Mantelfläche definiert, wenigstens teileweise oder sogar vollständig ein.

Durch eine derartige Konstruktion wird eine kompakte Bauweise erreicht. Die Konstruktion ermöglicht, die die Übersetzungsstufe (i≠1) abbildende Zahnradpaarung (Planetenräder der Planeteneinheit und Sonnenrad) radial innerhalb des Eingangsglieds (das drehangetriebene Bauteil des Getriebes, in das die Vortriebsleistung eingeleitet wird) bzw. axial nicht oder nur geringfügig versetzt gegenüber dem Eingangsglied vorzusehen, so dass das Getriebe insgesamt insbesondere in axialer Richtung flach und kompakt baut und wenig axialen Bauraum in Anspruch nimmt.

Die Sperreinrichtung ist vorzugsweise als passive Sperreinrichtung ausgebildet. Als "passiv" ist eine Sperreinrichtung zu verstehen, die kein Schaltelement benötigt, dass zur Herstellung des erwünschten Schaltzustands, also des Blockierens entweder des Stützsonnenrads oder der Planeteneinheit in eine Drehrichtung, damit diese momentabstützend wirken kann, einer externen Energiezufuhr oder einer sonstigen externen Aktuierung bedarf, sondern das Blockieren in einer Drehrichtung aus sich heraus gewährleistet. Eine derartige Sperreinrichtung kann insbesondere von einem Freilauf gebildet sein, der die Stützsonneneinheit in eine Drehrichtung blockiert und in die andere Drehrichtung weitgehend frei drehen lässt.

Es kann allerdings auch eine aktive Sperreinrichtung vorgesehen sein, die das Blockieren entweder des Stützsonnenrads oder der Planeteneinheit in wenigstens eine Drehrichtung erst infolge einer von außen veranlassten Aktuierung bzw. Aktivierung über eine externe Energiezufuhr vollzieht. Vorteilhaft an einer solchen aktiven ansteuerbaren Sperreinrichtung ist, dass diese auch einen Rekuperationsbetrieb und eine Rückwärtsfahrt bei eingelegter Übersetzungsstufe ermöglicht, weil auch das ansonsten freie Drehen der im Vortriebsfalls momentabstützend stehenden Stützsonneneinheit unterbunden werden kann.

Das Übersetzungsverhältnis der Übersetzungsstufe (Drehzahl des Getriebeausgangsglieds im Verhältnis zur Drehzahl des Getriebeeingangsglieds) ist bevorzugt größer 1. Als besonders geeignet wird ein Übersetzungsverhältnis um 2 angesehen, insbesondere ein Übersetzungsverhältnis mit 1,7 < i < 2.

Die schaltbare Kupplung zur Herstellung des Direktantriebs (i=1) kann grundsätzlich zwischen jeweils zwei beliebigen Einheitenwirken, also sowohl zwischen Außenradeinheit und Stütz- bzw. Abtriebssonneneinheit, Außenradeinheit und Planeteneinheit oder zwischen Planeteneinheit und Stütz- bzw. Abtriebssonneneinheit. Je nach Ausgestaltung des Getriebes ist aber eine bestimmte Anordnung der Kupplung als vorteilhaft anzusehen. Bevorzugt ist vorgesehen, dass die Kupplung zwischen Au-ßenradeinheit und Stützsonneneinheit wirkt.

Bevorzugt kommt eine Ausgestaltung des Getriebes zum Einsatz, bei der die Außenradeinheit nicht mit Planetenrädern der Planeteneinheit über eine Verzahnung in Eingriff steht, insbesondere also keine zu den Planetenrädern der Planeteneinheit weisende und mit diesen in Eingriff stehende Innenverzahnung aufweist. Zur Realisierung eines leistungsübertragenden Übersetzungsverhältnisses innerhalb des Zweiganggetriebes ist dann ein zusätzlicher Stufensprung vorzusehen.

Zum Einsatz in einem solchen Fall kommt ein Zweiganggetriebe, bei dem die Planeteneinheit wenigstens ein Planetenradpaar mit wenigstens einem ersten Planetenrad mit einem ersten wirksamen Planetenraddurchmesser und wenigstens einem mit dem ersten Planetenrad drehfest verbundenen zweiten Planetenrad mit einem zweiten wirksamen Planetenraddurchmesser aufweist, wobei neben einer Stützsonneinheit mit einem Stützsonnenrad mit einem wirksamen Stützsonnenraddurchmesser eine Abtriebssonneneinheit mit einem Abtriebssonnenrad mit einem wirksamen Abtriebssonnenraddurchmesser vorgesehen ist, wobei das erste Planetenrad mit dem Stützsonnenrad kämmt und das zweite Planetenrad mit dem Abtriebssonnenrad kämmt.

Stützsonnenrad und Abtriebssonnenrad sind dabei unabhängig voneinander drehgelagert und das Abtriebssonnenrad fungiert als drehangetriebenes Getriebeausgangsglied unabhängig davon, ob das Stützsonnenrad, das Abtriebssonnenrad und die Planeteneinheit durch Schließen der Kupplung als Block umlaufen (Direktantrieb) oder ob das Stützsonnenrad von der Sperreinrichtung blockiert ist und momentabstützend steht (Übersetzungsstufe). Auch wenn das Stützsonnenrad über eine Sperreinrichtung in wenigstens eine Drehrichtung blockiert ist wird demnach über das Abtriebssonnenrad als Teil des Getriebeausgangsglieds die Vortriebsleistung aus dem Getriebe abgeleitet.

Ferner ist bei einer derartigen Bauart vorgesehen, dass Außenradeinheit und Planeteneinheit dauerhaft drehfest miteinander verbunden sind und gemeinsam als zusammenhängende Funktionseinheit das drehangetriebene Getriebeeingangsglied bilden. Die Planetenradpaare drehen sich zusammen mit der Außenradeinheit um die Stützsonneneinheit und Abtriebssonneneinheit und rollen dabei auf den beiden Sonneneinheiten ab, wenn das Getriebe in der Übersetzungsstufe betrieben wird. Ein solcher Aufbau ermöglicht die Realisierung der als besonders geeignet angesehenen Übersetzungsstufen bei gleichzeitiger kompakter Bauweise der Getriebebaugruppe. Es wird so eine vorteilhafte axiale Integrationsmöglichkeit der den Direktantrieb gewährleistenden Kupplung in die Getriebebaugruppe geschaffen.

Als besonders vorteilhaft wird angesehen, wenn die den Direktantrieb gewährleistende Kupplung zwischen Außenradeinheit und Stützsonneneinheit oder zwischen Außenradeinheit und Abtriebssonneneinheit wirkt.

Es kann vorgesehen sein, dass die Achsantriebseinheit eine Differentialeinheit zum Antrieb von Radwellen aufweist und das Zweiganggetriebe und die Differentialeinheit in einem gemeinsamen Achsantriebsgehäuse aufgenommen sind.

In einer vorteilhaften Ausgestaltung kann vorgesehen sein, dass eine elektromotorisch angetriebene Getriebeantriebswelle unmittelbar mit der Außenradeinheit in leistungsübertragendem (Zahnrad-)Eingriff steht, um die elektromotorische Antriebsleistung des Elektromotors, in einer anderen Ausgestaltung die verbrennungsmotorische Leistung eines Verbrennungsmotors oder, bei einem hybridischen Antriebsstrang, auch die kombinierte elektromotorische und verbrennungsmotorische Antriebsleistung, in das Zweiganggetriebe einzuleiten. Bevorzugt weist die elektromotorisch und/oder verbrennungsmotorisch angetriebene Getriebeantriebswelle, über die die Leistung des E-Motors und/oder des Verbrennungsmotors in das Getriebe eingeleitet wird, eine Verzahnung auf, die mit einer Außenverzahnung, die auf wenigstens einem Teil der Mantelfläche des Außenrads der Außenradeinheit vorgesehenen ist, in Eingriff steht, um die Antriebsleistung unmittelbar in das einen Teil des Getriebeeingangsglieds bildende Außenrad, insbesondere in dessen äußere Mantelfläche, einzuleiten.

Damit die Achsantriebseinheit insgesamt kompakt baut, kann vorgesehen sein, dass die Getriebeantriebswelle koaxial zur einer Radwelle angeordnet ist. Insbesondere kann die Getriebeantriebswelle eine Hohlwelle sein, innerhalb der eine Radwelle als Innenwelle dreht.

Die Achsantriebseinheit weist zum Antrieb der Radwellen und damit der Fahrzeugantriebsräder bevorzugt eine Differentialeinheit mit einem drehangetriebenen Differentialgehäuse auf. Dabei kann vorgesehen sein, dass das Ausgangsglied des Getriebes oder eine vom Ausgangsglied des Getriebes angetriebene Getriebeabtriebswelle über ein daran drehfest angeordnetes oder einstückig daran ausgebildetes Antriebszahnrad unmittelbar mit dem Differentialgehäuse der Differentialeinheit leistungsübertragend in Eingriff steht.

Die Differentialeinheit kann dabei sowohl ein klassisches Differential mit einem formschlüssig wirkenden Differentialgetriebe sein, als auch ein kupplungsgesteuertes Differential sein, bei dem die Antriebsleistung über reibschlüssig wirkende und bevorzugt individuell ansteuerbare Differentialkupplungen von dem Differentialgehäuse auf die Radwellen übertragen wird. In diesem Fall weist die Achsantriebseinheit bevorzugt eine kupplungsgesteuerte Differentialeinheit mit wenigstens einer Differentialkupplung zum Antrieb von Radwellen auf, wobei die Differentialeinheit ein Differentialgehäuse hat und das Differentialgehäuse als Lamellenträger der wenigstens einen Differentialkupplung ausgebildet ist. Das Differentialgehäuse bildet dabei bevorzugt einen Außenlamellenträger der als Lamellenkuppplungen ausgebildeten Differentialkupplungen. Die Radwellenantriebsglieder sind dann drehfest mit einem Innenlamellenträger verbunden oder bilden diesen aus.

Zusammenfassend ist damit bei einem in eine Achsantriebseinheit integrierten lastschaltbaren Zweiganggetriebe zur Übertragung elektromotorischer und/oder verbrennungsmotorischer Vortriebsleistung innerhalb eines elektromotorisch und/oder verbrennungsmotorisch angetriebenen Kraftfahrzeug-Antriebsstrangs eines Personenkraftwagens, mit dem ein Direktantrieb und eine Übersetzungsstufe mit einem sich vom Direktantrieb unterscheidenden Übersetzungsverhältnis realisierbar ist und das die drei Baugruppeneinheiten Außenradeinheit, Planeteneinheit und Sonneneinheit aufweist, zur Erzielung einer kompakten Bauweise und bestmöglichen Integration in eine Achsantriebseinheit bei gleichzeitiger Ermöglichung eines geeigneten Übersetzungssprungs vorgesehen, dass bei bestehender Vortriebsleistungsübertragung die Vortriebsleistung über die Außenradeinheit in das Getriebe eingeleitet ist.

In den Zeichnungen zeigt
- Figur 1: eine nicht zur Erfindung gehörige Ausgestaltung einer bevorzugt elektromotorisch angetriebenen Achsantriebseinheit mit einem Zweiganggetriebe,
- Figur 2: das Zweiganggetriebe aus Figur 1 in einer vergrößerten Darstellung gemäß dem in Figur 1 angedeuteten Ausschnitt A,
- Figur 3: eine zur Erfindung gehörige, mögliche Ausgestaltung einer bevorzugt elektromotorisch angetriebenen Achsantriebseinheit mit einem Zweiganggetriebe,
- Figur 4: eine erste Variante eines Zweiganggetriebes, das alternativ zu der in Figur 3 gezeigten Ausführungsform in der Achsantriebseinheit zum Einsatz kommen kann,
- Figur 5: eine zweite Variante eines Zweiganggetriebes, dass alternativ zu der in Figur 3 gezeigten ersten Variante und zu der in Figur 4 gezeigten Ausführungsform zum Einsatz kommen kann, und
- Figur 6: eine Achsantriebseinheit mit der in Figur 4 gezeigten Variante eines Zweiganggetriebes mit einer kupplungsgesteuerten Differentialeinheit.

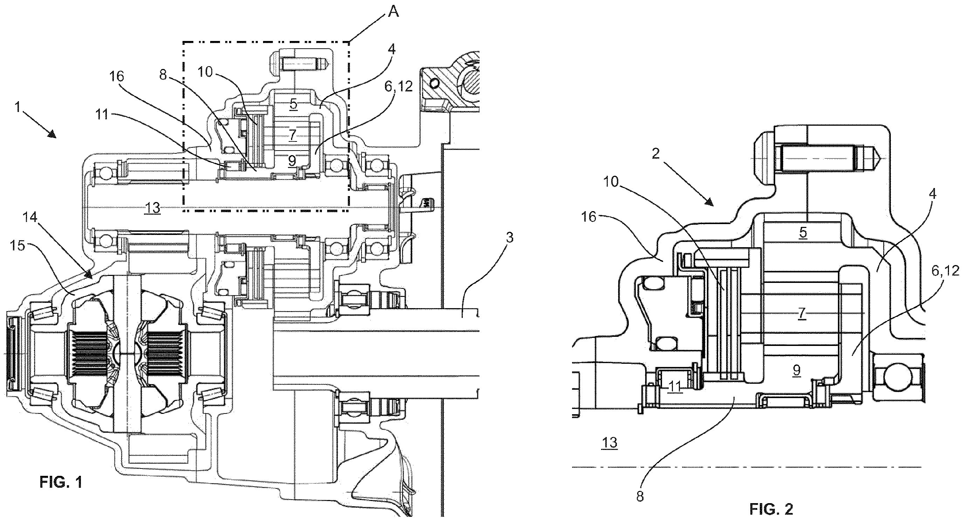

Figur 1 zeigt eine nicht zur Erfindung gehörige Achsantriebseinheit 1 mit einem integrieren Zweiganggetriebe 2. Die Achsantriebseinheit ist für den Einsatz in einem elektromotorischen und/oder verbrennungsmotorischen (Hybrid-)Antriebstrang eines Kraftfahrzeugs konzipiert. Figur 2 zeigt das in Figur 1 mit Einzelheit A gekennzeichnete Zweiganggetriebe in einer vergrößerten Darstellung.

Eine beispielsweise von einem Elektromotor angetriebene Getriebeantriebswelle 3 steht mit einer Außenradeinheit 4 eines Zweiganggetriebes 2 über eine Außenverzahnung unmittelbar in Eingriff, um die elektromotorische Antriebsleistung über die Außenradeinheit 4 in das Zweiganggetriebe 2 einzuleiten. Die Außenradeinheit 4 weist hierzu ein Außenrad 5 auf, auf dessen nach außen weisender Mantelfläche die mit der angetriebenen Getriebeantriebswelle 3 in Eingriff stehende Außenradverzahnung unmittelbar ausgebildet ist. Das Außenrad 5 dient damit als Eingangsglied des Getriebes.

Radial in das Außenrad 5 integriert ist eine Planeteneinheit 6 mit einer Mehrzahl von Planetenrädern 7, die wiederum mit einem ebenfalls axial in die Planeteneinheit 6 integrierten Sonnenrad 9 einer Sonneneinheit 8 kämmen. Bei dem in Figur 1 dargestellten Ausführungsbeispiel ist das Außenrad 5 als Hohlrad, also mit einer innenseitigen Verzahnung, die mit den Planetenrädern 7 kämmt, ausgebildet.

Seitlich neben der Planeteneinheit 6 ist eine hydraulisch betätigbare Kupplung 10 angeordnet, mit der die Sonneneinheit 8 und die Planeteneinheit 6 gegeneinander durch Schließen der Kupplung 10 verblockt werden können, so dass das die Außenradeinheit 4, die Planeteneinheit 6 und die Sonneneinheit 8 umfassende Zweiganggetriebe 2 zur Realisierung eines Direktantriebs (i=1) als Block rotieren kann. Hierbei dreht sich das Sonnenrad 9 gegenüber dem Achsantriebsgehäuse 16 in einer ersten Drehrichtung.

Ist die Kupplung 10 zur Realisierung einer Übersetzungsstufe mit einem Übersetzungsverhältnis i≠1 geöffnet, treibt die Innenverzahnung des Außenrads 5 die Planetenräder 7 an, die wiederum auf dem Sonnenrad 9 abrollen, während das Sonnenrad 9 selbst über einen als Sperreinrichtung fungierenden Freilauf 11, der das Sonnenrad 9 in eine der ersten Drehrichtung entgegengesetzten zweiten Drehrichtung gegenüber dem Achsantriebsgehäuse 16 momentabstützend blockiert, still steht, so dass die Planetenräder 7 über das Sonnenrad 9 abrollen und unter Realisierung der Übersetzungsstufe einen Steg 12 der Planeteneinheit 6 antreiben, der mit einer Getriebeabtriebswelle 13 formschlüssig in Eingriff steht. Das Sonnenrad 9 fungiert damit in dem in Figur 1 gezeigten Ausführungsbeispiel als Stützsonnenrad, die Planeteneinheit 6 mit dem Steg 12 bildet das Ausgangsglied des Getriebes.

Über die Getriebeabtriebswelle 13 wird das Differentialgehäuse 15 einer Differentialeinheit 14 angetrieben, über das die Antriebsleistung letztlich den zu den Antriebsrädern führenden Radwellen zugeleitet wird.

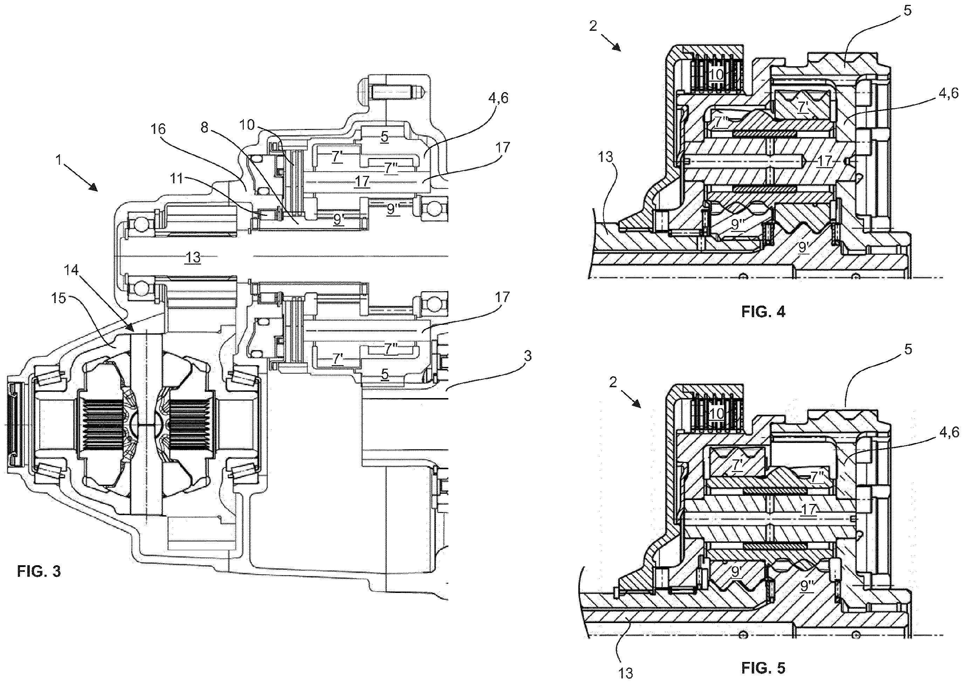

Während die in Figur 1 und Figur 2 gezeigten Ausführungsbeispiele ein Zweiganggetriebe mit einem innenverzahnten Hohlrad als Außenrad 5 erfordern, um das Übersetzungsverhältnis der Übersetzungsstufe abbilden zu können, kommt bei den in den Figuren 3 bis 6 gezeigten Ausführungsbeispielen ein Außenrad 5 ohne Innenverzahnung zum Einsatz.

Die von einem Antriebsmotor angetriebene Getriebeantriebswelle 3 kämmt mit einem Außenrad 5 einer Außenradeinheit 4, das wie schon bei dem in Figur 1 und Figur 2 gezeigten Ausführungsbeispiel außenseitig auf seiner Mantelfläche eine Au-ßenradverzahnung aufweist. Die Außenradeinheit 4 ist in dem in Figuren 3 bis 6 gezeigten Ausführungsbeispielen allerdings drehfest mit der Planeteneinheit 6 verbunden, so dass ein Verdrehen von Planeteneinheit 6 und Außenradeinheit 4 zueinander unabhängig von der Schaltstellung der Kupplung 10 ausgeschlossen ist. Außenradeinheit 4 und Planeteneinheit 6 bilden somit zusammen eine Funktionseinheit, die als Eingangsglied des Zweiganggetriebes fungiert.

Die Planeteneinheit 6 weist eine Mehrzahl von Planetenradpaaren auf, die jeweils ein erstes Planetenrad 7' und ein zweites Planetenrad 7" umfassen. Erstes Planetenrad 7` und zweites Planetenrad 7" sind drehfest miteinander verbunden und weisen unterschiedliche wirksame Durchmesser auf. Das Planetenradpaar kann hierzu entweder einstückig ausgebildet sein (Figur 3) oder zumindest, wie in Figur 4 und Figur 5 gezeigt, mehrstückig mit drehfest zueinander angeordneten ersten Planetenrädern 7' und zweiten Planetenrädern 7" ausgebildet sein.

Wird bei den in Figur 3 bis Figur 6 gezeigten Ausführungsbeispielen die Außenradeinheit 4 bzw. das Außenrad 5 über die Getriebeantriebswelle 3 drehangetrieben, nimmt das Außenrad 5 Planetenradwellen 17 mit, auf der die Planetenradpaare drehbar gelagert sind. Das erste Planetenrad 7` kämmt mit einem Stützsonnenrad 9`, das zweite Planetenrad 7" kämmt mit einem Abtriebssonnenrad 9". Erstes Planetenrad und zweites Planetenrad sowie Stützsonnenrad 9' und Abtriebssonnenrad 9" haben jeweils unterschiedlich wirksame Durchmesser.

Seitlich neben der als Getriebeeingangsglied fungierenden Funktionseinheit aus Außenradeinheit 4 und Planeteneinheit 6 ist eine Kupplung 10 angeordnet. Über diese Kupplung können das Stützsonnenrad 9' auf der einen und die Funktionseinheit aus Außenradeinheit 4 und Planeteneinheit 6 auf der anderen Seite gegeneinander verblockt werden, so dass das Getriebe in seiner Gesamtheit, einschließlich Stützsonnenrad 9' und Abtriebssonnenrad 9" als Block in einer ersten Drehrichtung umläuft und einen Direktantrieb (i=1) gewährleistet (geschlossene Kupplung).

Ist die Kupplung geöffnet stützt sich das Stützsonnenrad 9` über einen Freilauf 11 in der schon zu Figur 1 und Figur 2 beschriebenen Weise gegen das Achsantriebsgehäuse 16 ab. Das erste Planetenrad 7` rollt auf dem stehenden Stützsonnenrad 9' ab, während es um die Planetenradwelle 17 rotiert und dabei das zweite Planetenrad 7" unmittelbar antreibt, welches wiederum über die zwischen dem zweiten Planetenrad 7" und dem Abtriebssonnenrad 9" wirkende Verzahnung das Abtriebssonnenrad 9" und damit die hiermit drehfest verbundene Getriebeabtriebswelle 13 antreibt. Abtriebssonnenrad 9" und Getriebeabtriebswelle 13 können, sofern sie einstückig ausgebildet sind, gemeinsam das Getriebeausgangsglied bilden. Selbstverständlich können die Getriebeabtriebswelle 13 und das Abtriebssonnenrad 9" auch mehrteilig ausgeführt sein, indem Abtriebssonnenrad 9" als von der Getriebeabtriebswelle 13 separates Bauteil drehfest mit dieser verbunden ist.

Über die Getriebeabtriebswelle 13 wird, wie schon zu Figur 1 erläutert, eine Differentialeinheit 14 mit einem Differentialgehäuse 15 angetrieben.

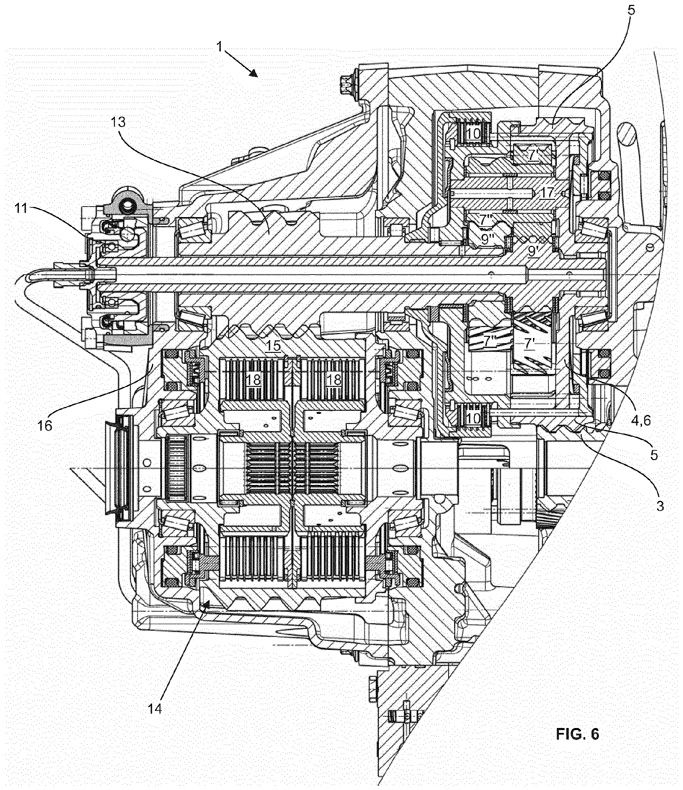

Im Unterschied zu Figur 1 und Figur 3 zeigt Figur 6 eine Achsantriebseinheit 1, bei der die Differentialeinheit 14 kein formschlüssig wirkendes Differentialgetriebe, sondern zwei individuell ansteuerbare Differentialkupplungen 18 aufweist, über die die elektromotorische Antriebsleistung zu den Antriebsrädern weitergeleitet wird. Ansonsten entspricht das in Figur 6 dargestellte Zweiganggetriebe 2 der in Figur 4 im Detail dargestellten Ausführungsform. Allen in den Figuren gezeigten Achsantriebseinheiten 1 gemein ist, dass die Getriebeantriebswelle 3 als Hohlwelle ausgeführt ist, deren Rotationsachse mit der Rotationsachse der Radwellen zusammenfällt.

Bei der aus Figur 6 ersichtlichen Konstruktion ist der Freilauf 11, der bei den Ausführungsbeispielen von Figur 1 und Figur 2 im Inneren des Achsantriebsgehäuses 16 integriert ist, nach außen verlagert worden. Hierzu ist eine Innenwelle mit dem Stützsonnenrad 9' verbunden und innerhalb der als Hohlwelle ausgebildeten Getriebeabtriebswelle 13 nach außen geführt, um dort mit der von außen am Achsantriebsgehäuse 16 angeordneten und damit von außen gut zugänglichen Sperreinrichtung (Freilauf 11) in der zuvor schon beschriebenen Weise zusammenzuwirken.

Zur Realisierung des gewünschten Übersetzungsverhältnisses i>1 ist der wirksame Durchmesser von erstem Planetenrad 7` größer als der wirksame Durchmesser des zweiten Planetenrads 7" und dem entsprechend der wirksame Durchmesser des Stützsonnenrades 9' kleiner als der wirksame Durchmesser des Abtriebssonnenrads 9". Ein Vergleich von Figur 4 und Figur 5 verdeutlicht, dass das mit dem Stützsonnenrad 9` kämmende erste Planetenrad 7' sowohl auf der der Kupplung 10 abgewandten bzw. der in Figur 4 rechten Seite des Planetenradpaares angeordnet sein kann als auch auf der der Kupplung 10 zugewandten bzw. der in Figur 5 linken Seite des Planetenradpaares angeordnet sein kann. In Figur 5 ist entgegen der Ausführung in Figur 4 und Figur 6 die Getriebeabtriebswelle 13 demnach als Innenwelle ausgebildet ist, während die mit dem einer Sperreinrichtung (Freilauf 11) zusammenwirkende und mit dem Stützsonnenrad 9' drehfest verbundene Welle als eine die Innenwelle umschließende Hohlwelle ausgebildet ist.

Die in Figur 4 und Figur 6 gezeigte Ausführung ist allerdings zu bevorzugen, weil hierbei die Kupplung 10 die als Getriebeeingangsglied fungierende Funktionseinheit (Außenradeinheit 4 und die hiermit eine Einheit bildende Planeteneinheit 6) direkt mit der Getriebeabtriebswelle 13 verblockt, so dass die weiteren, dazwischen liegenden Bauteile (Planetenradpaar, Stützsonnenrad, Lager, etc.) wirksam überbrückt und somit weitgehend aus der Antriebskette herausgenommen sind, so dass diese beim Betrieb des Fahrzeugs im Direktantrieb keiner nennenswerten Beanspruchung unterliegen.

Vorteilhaft an der aus Figur 4 ersichtlichen Ausgestaltung ist ferner, dass die Kupplungslamellen der Kupplung 10 um das zweite Planetenrad 7" herum angeordnet sein können, das mit seiner äußeren Mantelfläche einen kleineren Durchmesser überstreicht als das erste Planetenrad 7". Hierdurch kann die Kupplung 10 trotz der Tatsache, dass diese zumindest einen Teil der Planetenradpaare radial außenseitig umgibt, einen kleineren Durchmesser aufweisen als bei der in Figur 5 gezeigten Ausführungsform, bei der die Kupplung 10 um das erste Planetenrad 7` herum angeordnet ist.

### Bezugszeichenliste

- 1: Achsantriebseinheit
- 2: Zweiganggetriebe
- 3: Getriebeantriebswelle
- 4: Außenradeinheit
- 5: Außenrad
- 6: Planeteneinheit
- 7: Planetenräder
- 8: Sonneneinheit
- 9: Sonnenrad
- 10: Kupplung
- 11: passiver Freilauf
- 12: Steg
- 13: Getriebeabtriebswelle
- 14: Differentialeinheit
- 15: Differentialgehäuse
- 16: Achsantriebsgehäuse
- 17: Planetenradwelle
- 18: Differentialkupplungen

## Patentansprüche

1. Achsantriebseinheit für einen elektromotorisch angetriebenen Kraftfahrzeug-Antriebsstrang eines Personenkraftwagens mit einem schaltbaren Zweiganggetriebe (2) zur Übertragung von Vortriebsleistung, umfassend ein drehangetriebenes Eingangsglied, über das bei bestehender Vortriebsleistungsübertragung die Vortriebsleistung in das Getriebe (2) eingeleitet ist, und ein Ausgangsglied, über das die Vortriebsleistung aus dem Getriebe (2) abgeleitet wird, wobei zwischen Eingangsglied und Ausgangsglied in Abhängigkeit der Schaltstellung einer schaltbaren Kupplung (10) ein Direktantrieb (i=1) oder eine Übersetzungsstufe mit einem sich vom Direktantrieb unterscheidenden Übersetzungsverhältnis (i≠1) realisiert ist, und wobei eine Außenradeinheit (4) und eine Planeteneinheit (6) vorgesehen sind, und bei bestehender Vortriebsleistungsübertragung die Vortriebsleistung über die Außenradeinheit (4) in das Getriebe (2) eingeleitet ist, **dadurch gekennzeichnet, dass**
die Planeteneinheit (6) wenigstens ein Planetenradpaar mit wenigstens einem ersten Planetenrad (7') mit einem ersten wirksamen Planetenraddurchmesser und wenigstens einem mit dem ersten Planetenrad (7') drehfest verbundenen zweiten Planetenrad (7") mit einem zweiten wirksamen Planetenraddurchmesser aufweist, wobei neben einer Stützsonneinheit mit einem Stützsonnenrad (9') mit einem wirksamen Stützsonnenraddurchmesser eine Abtriebssonneneinheit mit einem Abtriebssonnenrad (9") mit einem wirksamen Abtriebssonnenraddurchmesser vorgesehen ist, und wobei das erste Planetenrad (7') mit dem Stützsonnenrad (9') kämmt und das zweite Planetenrad (7") mit dem Abtriebssonnenrad (9") kämmt, wobei eine Sperreinrichtung (11) das Stützsonnenrad (9') zur Realisierung der Übersetzungsstufe in wenigstens eine Drehrichtung blockiert und die Vortriebsleistung über das Abtriebssonnenrad (9") aus dem Getriebe abgeleitet wird.

2. Achsantriebseinheit nach Anspruch 1, **dadurch gekennzeichnet, dass** die Außenradeinheit (4) ein Außenrad (5) aufweist, in die Planetenräder (7) der Planeteneinheit (6) wenigstens zum Teil radial innenliegend integriert sind.

3. Achsantriebseinheit nach einem der beiden vorhergehenden Ansprüche, **dadurch gekennzeichnet, dass** die Außenradeinheit (4) ein Außenrad (5) mit einer Außenverzahnung aufweist, über die die Vortriebsleistung in die Außenradeinheit (4) eingeleitet wird.

4. Achsantriebseinheit nach einem der vorhergehenden Ansprüche, **dadurch gekennzeichnet, dass** die Sperreinrichtung eine passive Sperreinrichtung ist.

5. Achsantriebseinheit nach einem der vorhergehenden Ansprüche, **dadurch gekennzeichnet, dass** die Sperreinrichtung als Freilauf (11) ausgebildet ist, der die Stützsonneinheit in eine Drehrichtung blockiert und in die andere Drehrichtung drehen lässt.

6. Achsantriebseinheit nach einem der vorhergehenden Ansprüche, **dadurch gekennzeichnet, dass** die Sperreinrichtung eine aktive Sperreinrichtung ist, die die Stützsonneinheit in wenigstens eine Drehrichtung, bevorzugt in beide Drehrichtungen, infolge einer von außen veranlassten Aktuierung oder einer von außen veranlassten Aktivierung über eine externe Energiezufuhr zu blockieren vermag.

7. Achsantriebseinheit nach einem der vorhergehenden Ansprüche, **dadurch gekennzeichnet, dass** die Übersetzungsstufe ein Übersetzungsverhältnis größer 1, bevorzugt ein Übersetzungsverhältnis mit 1,7 < i < 2 aufweist.

8. Achsantriebseinheit nach einem der vorhergehenden Ansprüche, **dadurch gekennzeichnet, dass** die schaltbare Kupplung (10) zwischen der Außenradeinheit (4) und der Stützsonneneinheit oder zwischen der Außenradeinheit (4) und der Abtriebssonneneinheit wirkt.

9. Achsantriebseinheit nach einem der vorhergehenden Ansprüche, **dadurch gekennzeichnet, dass** die Außenradeinheit (4) nicht mit Planetenrädern (7, 7', 7") der Planeteneinheit in Eingriff steht.

10. Achsantriebseinheit nach einem der vorhergehenden Ansprüche, **dadurch gekennzeichnet, dass** die Kupplung (10) die Abtriebssonneneinheit mit der Außenradeinheit (4) zu verblocken vermag und die Außenradeinheit (4) und Planeteneinheit (6) zur gemeinsamen Bildung des Eingangsglieds dauerhaft drehfest miteinander zu einer Funktionseinheit verbunden sind.

11. Achsantriebseinheit nach dem vorhergehenden Anspruch, **dadurch gekennzeichnet, dass** die Achsantriebseinheit (1) eine Differentialeinheit (14) zum Antrieb von Radwellen aufweist und das Zweiganggetriebe (2) und die Differentialeinheit (14) in einem gemeinsamen Achsantriebsgehäuse (16) angeordnet sind.

12. Achsantriebseinheit nach einem der beiden vorhergehenden Ansprüche, **dadurch gekennzeichnet, dass** eine motorisch angetriebene Getriebeantriebswelle (3) unmittelbar mit der Außenradeinheit in leistungsübertragendem Eingriff steht, um die motorische Antriebsleistung in das Zweiganggetriebe (2) einzuleiten.

13. Achsantriebseinheit nach einem der drei vorhergehenden Ansprüche, **dadurch gekennzeichnet, dass** die motorisch angetriebene Getriebeantriebswelle (3) koaxial zur einer Radwelle angeordnet ist.

14. Achsantriebseinheit nach einem der vier vorhergehenden Ansprüche, **dadurch gekennzeichnet, dass** das Ausgangsglied des Getriebes (2) unmittelbar mit einem Differentialgehäuse (15) der Differentialeinheit (14) leistungsübertragend in Eingriff steht.

15. Achsantriebseinheit nach einem der fünf vorhergehenden Ansprüche, **dadurch gekennzeichnet, dass** die Achsantriebseinheit (1) eine über wenigstens eine Differentialkupplung (18) kupplungsgesteuerte Differentialeinheit (14) aufweist, die Differentialeinheit (14) ein Differentialgehäuse (15) hat und das Differentialgehäuse (15) als Kupplungslamellenträger der wenigstens einen Differentialkupplung (18) ausgebildet ist.

## Claims

1. Final drive unit for an electric motor-driven motor vehicle drive train of a passenger car with a shiftable two-speed transmission (2) for transmitting propulsion power within a motor vehicle drivetrain, comprising a rotationally driven input member, via which, when propulsion power is being transmitted, the propulsion power is introduced into the transmission (2), and an output member, via which the propulsion power can be transmitted out of the transmission (2), wherein, subject to the shift position of a shiftable clutch (10), a direct drive (i=1) or a transmission stage having a transmission ratio (i≠1) which differs from the direct drive can be implemented between the input member and the output member, and wherein an outer gear unit (4) and a planet gear unit (6) are provided when propulsion power is being transmitted, the propulsion power is introduced into the transmission (2) via the outer gear unit (4), **characterized in that** the planet gear unit (6) has at least one planet gear pair having at least one first planet gear (7') having a first effective planet gear diameter and at least one second planet gear (7") connected for conjoint rotation to the first planet gear (7') and having a second effective planet gear diameter, wherein, in addition to a supporting sun unit having a supporting sun gear (9') having an effective supporting sun gear diameter, an output sun unit having an output sun gear (9") having an output sun gear diameter is provided, and wherein the first planet gear (7') meshes with the supporting sun gear (9'), and the second planet gear (7") meshes with the output sun gear (9"), wherein the supporting sun gear (9') is blocked in at least one direction of rotation by a blocking device, and the propulsion power is transmitted out of the transmission via the output sun gear (9").

2. A final drive unit as claimed in claim 1, **characterized in that** the outer gear unit (4) has an outer gear (5), into which planet gears (7) of the planet gear unit (6) are at least partially integrated, being situated radially on the inside.

3. The final drive unit as claimed in either of the two preceding claims, **characterized in that** the outer gear unit (4) has an outer gear (5) having outer teeth, via which the propulsion power is introduced into the outer gear unit (4).

4. The final drive unit as claimed in any one of the preceding claims, **characterized in that** the blocking device is a passive blocking device.

5. The final drive unit as claimed in any one of the preceding claims, **characterized in that** the blocking device is designed as a freewheel (11), which, in one direction of rotation, blocks the supporting sun unit with which the freewheel (11) interacts and allows it to rotate in the other direction of rotation.

6. The final drive unit as claimed in any one of the preceding claims, **characterized in that** the blocking device is an active blocking device, which is capable of blocking the supporting sun unit in at least one direction of rotation, preferably in both directions of rotation, as a result of an externally initiated actuation or an externally initiated activation via an external energy supply.

7. The final drive unit as claimed in any one of the preceding claims, **characterized in that** the transmission stage has a transmission ratio greater than 1, preferably a transmission ratio of 1.7 < i < 2.

8. The final drive unit as claimed in any one of the preceding claims, **characterized in that** the shiftable clutch (10) acts between the outer gear unit (4) and the sun unit (8).

9. The final drive unit as claimed in any one of the preceding claims, **characterized in that** the outer gear unit (4) is not in engagement with planet gears (7, 7', 7") of the planet gear unit.

10. The final drive unit as claimed in any one of the preceding claims, **characterized in that** the clutch (10) is capable of locking the supporting sun unit or the output sun unit to the outer gear unit (4), and the outer gear unit (4) and the planet gear unit (6) are connected permanently to one another for conjoint rotation to form a functional unit in order to jointly form the input member.

11. The final drive unit as claimed in any one of the preceding claims, **characterized in that** the final drive unit (1) has a differential unit (14) for driving wheel shafts, and the two-speed transmission (2) and the differential unit (14) are arranged in a common final drive housing (16).

12. The final drive unit as claimed in any one of the preceding claims, **characterized in that** a motor-driven transmission drive shaft (3) is in direct power-transmitting engagement with the outer gear unit in order to introduce the driving power of the motor into the two-speed transmission (2).

13. The final drive unit as claimed in the preceding claim, **characterized in that** the motor-driven transmission drive shaft (3) is arranged coaxially with a wheel shaft.

14. The final drive unit as claimed in any one of the preceding claims in conjunction with claim 11, **characterized in that** the output member of the transmission (2) is in direct power-transmitting engagement with a differential housing (15) of the differential unit (14).

15. The final drive unit as claimed in any one of the preceding claims, **characterized in that** the final drive unit (1) has a differential unit (14), which is clutchcontrolled by means of at least one differential clutch (18), the differential unit (14) has a differential housing (15), and the differential housing (15) is designed as a clutch plate carrier of the at least one differential clutch (18).

## Revendications

1. Unité d'entraînement d'essieu pour une chaîne cinématique de véhicule automobile entraînée par un moteur électrique d'une voiture avec une boîte de vitesses à deux rapports (2) commutable pour la transmission de la puissance d'entraînement, comprenant un organe d'entrée entraîné en rotation, par lequel la puissance d'entraînement est introduite dans la boîte de vitesses (2) lorsque la transmission de la puissance d'entraînement existe, et un organe de sortie, par lequel la puissance d'entraînement est dérivée de la boîte de vitesses (2), un entraînement direct (i=1) ou un étage de démultiplication avec un rapport de transmission (i≠1) différent de l'entraînement direct étant réalisé entre l'organe d'entrée et l'organe de sortie en fonction de la position de commutation d'un embrayage commutable (10), et une unité de roue extérieure (4) et une unité planétaire (6) étant prévues, et la puissance d'entraînement étant introduite dans la boîte de vitesses (2) par l'intermédiaire de l'unité de roue extérieure (4) lorsque la transmission de la puissance d'entraînement existe, **caractérisé en ce que**
l'unité planétaire (6) comprend au moins une paire de roues planétaires avec au moins une première roue planétaire (7') ayant un premier diamètre de roue planétaire efficace et au moins une deuxième roue planétaire (7") reliée de manière fixe en rotation à la première roue planétaire (7') et ayant un deuxième diamètre de roue planétaire efficace, une unité solaire de sortie avec une roue solaire de sortie (9") ayant un diamètre de roue solaire de sortie efficace étant prévue en plus d'une unité solaire d'appui avec une roue solaire d'appui (9') ayant un diamètre de roue solaire d'appui efficace, et la première roue planétaire (7') s'engrenant avec la roue solaire d'appui (9') et la deuxième roue planétaire (7") s'engrenant avec la roue solaire de sortie (9"), un dispositif de blocage (11) bloquant la roue solaire d'appui (9') pour réaliser l'étage de démultiplication dans au moins un sens de rotation et la puissance d'entraînement étant dérivée de la boîte de vitesses par la roue solaire de sortie (9").

2. Unité d'entraînement d'essieu selon la revendication 1, **caractérisée en ce que** l'unité de roue extérieure (4) comprend une roue extérieure (5), dans laquelle des roues planétaires (7) de l'unité planétaire (6) sont intégrées au moins en partie radialement vers l'intérieur.

3. Unité d'entraînement d'essieu selon l'une des deux revendications précédentes, **caractérisée en ce que** l'unité de roue extérieure (4) comprend une roue extérieure (5) avec une denture extérieure, par laquelle la puissance d'entraînement est introduite dans l'unité de roue extérieure (4).

4. Unité d'entraînement d'essieu selon l'une des revendications précédentes, **caractérisée en ce que** le dispositif de blocage est un dispositif de blocage passif.

5. Unité d'entraînement d'essieu selon l'une des revendications précédentes, **caractérisée en ce que** le dispositif de blocage est conçu comme une roue libre (11) qui bloque l'unité solaire d'appui dans un sens de rotation et la laisse tourner dans l'autre sens de rotation.

6. Unité d'entraînement d'essieu selon l'une quelconque des revendications précédentes, **caractérisée en ce que** le dispositif de blocage est un dispositif de blocage actif capable de bloquer l'unité solaire d'appui dans au moins un sens de rotation, de préférence dans les deux sens de rotation, à la suite d'une activation provoquée de l'extérieur ou d'une activation provoquée de l'extérieur via une alimentation en énergie externe.

7. Unité d'entraînement d'essieu selon l'une des revendications précédentes, **caractérisée en ce que** l'étage de démultiplication comprend un rapport de transmission supérieur à 1, de préférence un rapport de transmission de 1,7 < i < 2.

8. Unité d'entraînement d'essieu selon l'une des revendications précédentes, **caractérisée en ce que** l'embrayage commutable (10) agit entre l'unité de roue extérieure (4) et l'unité solaire d'appui ou entre l'unité de roue extérieure (4) et l'unité solaire de sortie.

9. Unité d'entraînement d'essieu selon l'une des revendications précédentes, **caractérisée en ce que** l'unité de roue extérieure (4) n'est pas en prise avec des roues planétaires (7, 7', 7") de l'unité planétaire.

10. Unité d'entraînement d'essieu selon l'une quelconque des revendications précédentes, **caractérisée en ce que** l'embrayage (10) permet de bloquer l'unité solaire de sortie avec l'unité de roue extérieure (4) et **en ce que** l'unité de roue extérieure (4) et l'unité planétaire (6) sont reliées entre elles de manière permanente et solidaire en rotation pour former ensemble l'organe d'entrée en une unité fonctionnelle.

11. Unité d'entraînement d'essieu selon la revendication précédente, **caractérisée en ce que l'unité** d'entraînement d'essieu (1) comprend une unité de différentiel (14) pour l'entraînement d'arbres de roue et la boîte de vitesses à deux rapports (2) et l'unité de différentiel (14) sont disposées dans un carter d'entraînement d'essieu commun (16).

12. Unité d'entraînement d'essieu selon l'une des deux revendications précédentes, **caractérisée en ce qu'**un arbre d'entraînement de boîte de vitesses (3) entraîné par un moteur est directement en prise de transmission de puissance avec l'unité de roue extérieure pour introduire la puissance d'entraînement du moteur dans la boîte de vitesses à deux rapports (2).

13. Unité d'entraînement d'essieu selon l'une des trois revendications précédentes, **caractérisée en ce que** l'arbre d'entraînement de boîte de vitesses (3) entraîné par le moteur est disposé coaxialement à un arbre de roue.

14. Unité d'entraînement d'essieu selon l'une des quatre revendications précédentes, **caractérisée en ce que** l'organe de sortie de la boîte de vitesses (2) est en prise directe avec un carter de différentiel (15) de l'unité de différentiel (14) pour transmettre la puissance.

15. Unité d'entraînement d'essieu selon l'une des cinq revendications précédentes, **caractérisée en ce que** l'unité d'entraînement d'essieu (1) comprend une unité de différentiel (14) commandée par l'intermédiaire d'au moins un embrayage différentiel (18), l'unité de différentiel (14) a un carter de différentiel (15) et le carter de différentiel (15) est conçu comme support de disque d'embrayage de l'au moins un embrayage différentiel (18).
